(19) Europäisches Patentamt
European Patent Office
Office européen des brevets

(11) **EP 4 685 536 A1**

(12) **EUROPEAN PATENT APPLICATION**
published in accordance with Art. 153(4) EPC

(43) Date of publication:
**28.01.2026 Bulletin 2026/05**

(21) Application number: **24774542.5**

(22) Date of filing: **19.02.2024**

(51) International Patent Classification (IPC):
**G02B 6/44** $^{(2006.01)}$

(52) Cooperative Patent Classification (CPC):
**G02B 6/44**

(86) International application number:
**PCT/JP2024/005821**

(87) International publication number:
**WO 2024/195397 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.03.2023 JP 2023044714**

(71) Applicant: **Fujikura Ltd.
Tokyo 135-8512 (JP)**

(72) Inventor: **KANEKO, Soichiro
Tokyo 135-8512 (JP)**

(74) Representative: **Ter Meer Steinmeister & Partner
Patentanwälte mbB
Artur-Ladebeck-Strasse 51
33617 Bielefeld (DE)**

(54) **OPTICAL FIBER CABLE AND METHOD FOR MANUFACTURING OPTICAL FIBER CABLE**

(57) An optical fiber cable 1 includes a cable main body 10 that includes an optical fiber 21, a reinforcing sheet 60 and an outer sheath 70 that accommodates the cable main body 10, and a ripcord 50A and 50B that is disposed in a space 65 formed between the cable main body 10 and the reinforcing sheet 60. The reinforcing sheet 60 is in partial contact with the cable main body 10 in a state of holding an elastic deformation of the cable main body 10 toward an inside of the cable main body 10.

Fig. 1

EP 4 685 536 A1

## Description

[TECHNICAL FIELD]

The present invention relates to an optical fiber cable and a method of manufacturing an optical fiber cable.

For designated countries that are permitted to be incorporated by reference in the literature, the contents of Japanese Patent Application No. 2023-044714 filed with Japan Patent Office on March 20, 2023 is incorporated herein by reference and is regarded as a part of the description of this specification.

[BACKGROUND ART]

A known optical fiber cable includes a cable main body, an outer sheath that accommodates the cable main body, a reinforcing sheet that is disposed between the cable main body and the outer sheath, and ripcords that are disposed between the reinforcing sheet and the cable main body (refer to, for example, Patent Document 1).

[CITATION LIST]

[PATENT DOCUMENT]

PATENT DOCUMENT 1: JP 2017-72801 A

[SUMMARY OF THE INVENTION]

[PROBLEMS TO SOLVED BY INVENTION]

In the above-mentioned optical fiber cable, a space extending over the entire circumference in the circumferential direction of the cable is formed between the cable main body and the reinforcing sheet, and the ripcords are disposed in the space. Therefore, when the reinforcing sheet is torn by using the ripcord, the ripcord may move in the space between the cable main body and the reinforcing sheet, and thus the tearing operation is difficult.

An object of the present invention is to provide an optical fiber cable and a method of manufacturing the optical fiber cable capable of improving workability of the tearing operation by limiting movement of the ripcord in the circumferential direction within a certain range.

[MEANS FOR SOLVING PROBLEM]

[1] An aspect 1 of the present invention is an optical fiber cable comprising: a cable main body that includes an optical fiber; a protective layer that accommodates the cable main body; and a ripcord that is disposed in a space formed between the cable main body and the protective layer, wherein the protective layer is in partial contact with the cable main body in a state of holding an elastic deformation of the cable main body toward an inside of the cable main body.

[2] An aspect 2 of the present invention may be the optical fiber cable of the aspect 1, wherein a following formula (1) may be satisfied.

$$45° \leqq \theta \leqq 135° \ ... \ (1)$$

In the above formula (1), $\theta$ is an intersection angle between a virtual line and a direction of the elastic deformation, and the virtual line passes through a center of the optical fiber cable and the ripcord.

[3] An aspect 3 of the present invention may be the optical fiber cable of the aspect 1 or 2, wherein a distance of the space in a radial direction of the optical fiber cable may be equal to or less than an outer diameter of the ripcord.

[4] An aspect 4 of the present invention may be the optical fiber cable of the aspect 1, wherein a distance of the space in a radial direction of the optical fiber cable may be equal to or less than an outer diameter of the ripcord, and the ripcord and a direction of the elastic deformation may overlap with each other in a circumferential direction of the optical fiber cable.

[5] An aspect 5 of the present invention may be the optical fiber cable of any one of the aspects 1 to 4, wherein, in a cross section perpendicular to an extending direction of the optical fiber cable, a short axis portion of an inner circumferential surface of the protective layer and a short axis portion of an outer circumferential surface of the cable main body may be in contact with each other.

[6] An aspect 6 of the present invention may be the optical fiber cable of any one of the aspects 1 to 5, wherein the protective layer may include: a reinforcing sheet that covers an outer periphery of the cable main body; and a sheath that covers an outer periphery of the reinforcing sheet, and the reinforcing sheet may be in partial contact with the cable main body.

[7] An aspect 7 of the present invention may be the optical fiber cable of the aspect 6, wherein the reinforcing sheet may include a lap portion in which ends of the reinforcing sheet are laid on each other, and the lap portion and the ripcord may be located at different positions in a circumferential direction of the optical fiber cable.

[8] An aspect 8 of the present invention may be the optical fiber cable of any one of the aspects 1 to 7, wherein a thickness of a contact portion of the protective layer with the cable main body in a radial direction may be larger than a thickness of the other portion of the protective layer in the radial direction.

[9] An aspect 9 of the present invention may be the optical fiber cable of any one of the aspects 1 to 8, wherein a deformation rate Cr of the cable main body with respect to the cable main body in an unloaded state may satisfy a following formula (2).

$$4.1\% \leqq Cr \leqq 16.2\% \ ... \ (2)$$

[10] An aspect 10 of the present invention may be the optical fiber cable of any one of the aspects 1 to 9, wherein a recovery rate Rr of the cable main body in an unloaded state with respect to the cable main body may satisfy a following formula (3).

$$106\% \leqq Rr \leqq 131\% \ ... \ (3)$$

[11] An aspect 11 of the present invention may be the optical fiber cable of any one of the aspects 1 to 10, wherein the protective layer may include an inner circumferential surface on which no groove extending along an extending direction of the optical fiber cable is formed.

[12] An aspect 12 of the present invention may be the optical fiber cable of any one of the aspects 1 to 11, wherein the cable main body may include an outer circumferential surface on which no groove extending along an extending direction of the optical fiber cable is formed.

[13] An aspect 13 of the present invention is a method of manufacturing an optical fiber cable comprising: a first step of preparing a cable main body including an optical fiber; a second step of disposing a ripcord along an outer circumferential surface of the cable main body; and a third step of accommodating the cable main body and the ripcord in a protective layer and pressing and deforming the cable main body.

[14] An aspect 14 of the present invention may be the method of manufacturing the optical fiber cable of the aspect 13, wherein the protective layer may include: a reinforcing sheet that covers an outer periphery of the cable main body; and a sheath that covers an outer periphery of the reinforcing sheet, and the third step may include deforming the cable main body by pressing the reinforcing sheet in a direction that does not overlap with the ripcord and that is in a radial direction of the optical fiber cable after accommodating the cable main body and the ripcord in the reinforcing sheet.

[EFFECT OF THE INVENTION]

In the present invention, the protective layer is in partial contact with the cable main body in a state of holding an elastic deformation of the cable main body toward an inside of the cable main body, therefore it is possible to limit the movement of the ripcord in the circumferential direction of the optical fiber cable within a certain range, and it is possible to improve the workability of the tearing operation.

Further, in the present invention, the cable main body is accommodated in the protective layer and the cable main body is pressed and deformed when manufacturing the optical fiber cable, therefore it is possible to manufacture the optical fiber cable in which the movement of the ripcord in the circumferential direction of the optical fiber cable is limited within a certain range.

[BRIEF DESCRIPTION OF DRAWING(S)]

FIG. 1 is a cross-sectional view showing the optical fiber cable in the embodiment of the present invention;
FIG. 2 is a diagram showing the manufacturing apparatus for manufacturing the optical fiber cable in the embodiment of the present invention; and

FIG. 3 is a cross-sectional view showing the optical fiber cable in another embodiment of the present invention.

[MODE(S) FOR CARRYING OUT THE INVENTION]

Hereinafter, an embodiment of the invention will be described with reference to the drawings.

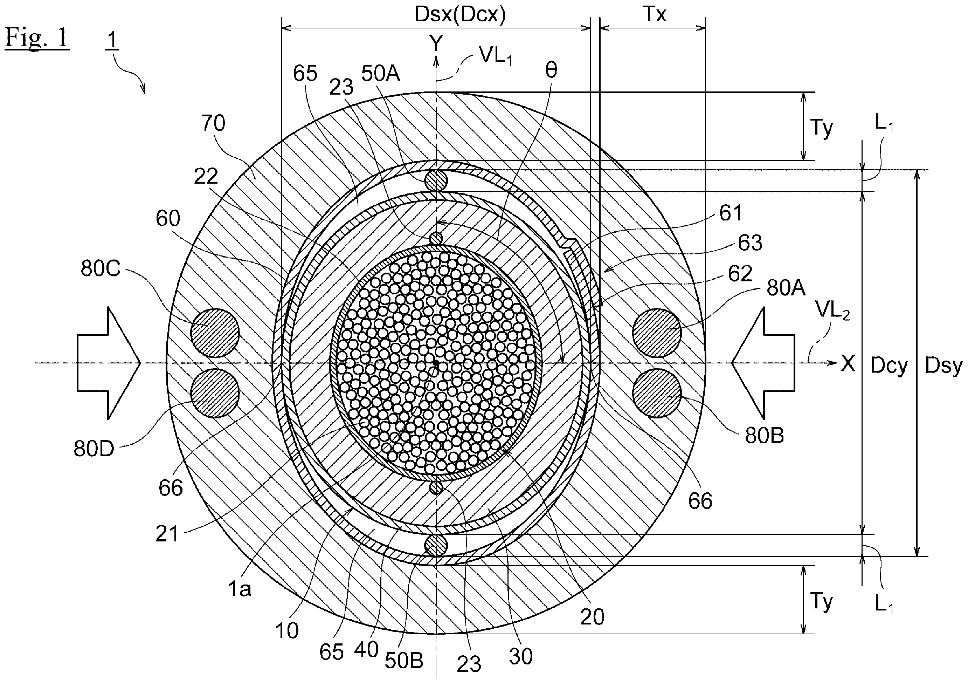

FIG. 1 is a cross-sectional view showing the optical fiber cable 1 in the embodiment of the present invention.

As shown in FIG. 1, an optical fiber cable 1 of the present embodiment includes a cable main body 10, ripcords 50A and 50B, a reinforcing sheet 60, an outer sheath 70, and tension members 80A to 80D. The optical fiber cable 1 is a cable that extends along the normal direction of the paper surface on which FIG. 1 is drawn, and FIG. 1 shows a cross section perpendicular to the extending direction (axial direction) of the optical fiber cable 1. The reinforcing sheet 60 and the outer sheath 70 correspond to an example of the "protective layer" in the present invention. The protective layer covers the outer periphery of the cable main body 10 and accommodates the cable main body 10. As will be described later, the optical fiber cable 1 may not include the reinforcing sheet 60. In this case, the outer sheath 70 corresponds to an example of the "protective layer" in the present invention.

The cable main body 10 includes an optical fiber assembly 20, an inner sheath 30, and a wrapping tape 40. The cable main body 10 may not include the wrapping tape 40. The optical fiber assembly 20 is configured by assembling optical fibers 21 extending along the axial direction of the optical fiber cable 1.

Although not particularly limited, the optical fiber assembly 20 of the present embodiment includes optical fiber units. Each of the optical fiber units is formed by bundling optical fiber tapes with bundling members. Each of the optical fiber tapes is an intermittent bonded optical fiber tape in which optical fibers (optical fiber wires) 21 arranged in parallel are intermittently bonded. The bundling member is wound in a mesh shape or a spiral shape around the outer periphery of the bundle of the optical fiber tapes.

The optical fiber assembly is formed by twisting the optical fiber units together. As a specific example of the method of twisting the optical fiber units, the SZ twisting manner and the unidirectional twisting manner can be exemplified. The SZ twisting manner is a method of twisting linear bodies while reversing the twisting direction at predetermined intervals. The unidirectional twisting manner is a twisting method having only one direction as a twisting direction and is a twisting method in which the linear bodies are spirally twisted together.

The configuration of the optical fiber unit is not particularly limited to the above configuration. For example, the optical fiber unit may be configured by twisting the optical fiber tapes together without using the bundling members. Alternatively, the optical fiber unit may be configured by bundling or twisting the optical fibers instead of the optical fiber tapes. Alternatively, a unit intermediate may be formed by bundling or twisting the optical fiber tapes or the optical fibers, and the optical fiber unit may be configured by bundling or twisting the unit intermediates.

The configuration of the optical fiber assembly 20 is not particularly limited to the above configuration. For example, instead of the optical fiber units, the optical fiber assembly may be formed of a single optical fiber unit formed by bundling or twisting the optical fiber tapes or the optical fibers.

The inner sheath 30 is a cylindrical member covering the outer periphery of the optical fiber assembly 20. The inner sheath 30 is made of an elastically deformable material. Although not particularly limited, as examples of the material of which the inner sheath 30 is made, a resin material such as polyvinyl chloride (PVC), polyethylene (PE), nylon, ethylene fluoride, and polypropylene (PP) can be exemplified.

The wrapping tape 40 covers the outer periphery of the inner sheath 30. In the present embodiment, the wrapping tape 40 is longitudinally disposed and wound around the outer periphery of the inner sheath 30. Specifically, the wrapping tape 40 is wound around the outer periphery of the inner sheath 30 in a state in which the longitudinal direction of the wrapping tape 40 corresponds to the axial direction of the optical fiber cable 1 and the width direction of the wrapping tape 40 corresponds to the circumferential direction of the optical fiber cable 1. The winding method of the wrapping tape 40 is not particularly limited to the above longitudinal disposing and winding and may be, for example, horizontal winding (spiral winding). The outer periphery of the inner sheath 30 may be covered with the wrapping tapes 40, or the wrapping tape 40 may have a folded portion.

In addition to the wrapping tape (outer wrapping tape) 40, the outer periphery of the optical fiber assembly 20 may be covered with a wrapping tape (inner wrapping tape) 22, and the wrapping tape 22 may be interposed between the optical fiber assembly 20 and the inner sheath 30. In this case, the cable main body 10 includes the wrapping tape 22. The cable main body 10 may not include the wrapping tape 22. In addition to the ripcords (outer ripcords) 50A and 50B described later, ripcords (inner ripcords) 23 may be interposed between the wrapping tape 22 covering the outer periphery of the optical fiber assembly 20 and the inner sheath 30. In this case, the cable main body 10 includes the ripcords 23. The optical fiber 21 can be taken out from the optical fiber cable 1 by tearing the inner sheath 30 with the ripcord 23. The cable body 10 may not include the ripcord 23.

The wrapping tape 40 is constituted by a nonwoven fabric or a film. Although not particularly limited, as specific examples of the nonwoven fabric constituting the wrapping tape 40, nonwoven fabrics made of fibers such as polyester, polyethylene, and polypropylene can be exemplified. Although not particularly limited, as specific examples of the film constituting the wrapping tape 40, a film made of a resin such as polyethylene (PE), polypropylene (PP), polyethylene terephthalate (PET), polybutylene terephthalate (PBT), and nylon can be exemplified.

In the case where the wrapping tape 40 is constituted by nonwoven fabric, the wrapping tape 40 may function as a water absorbing layer for stopping water into the optical fiber cable 1 by adding a water absorbing powder to the nonwoven fabric. At the time of water immersion, the water absorbing powder swells and seals the gap in the optical fiber cable 1 to stop the water inside the optical fiber cable 1.

Although not particularly limited, as specific examples of the water absorbing powder, material having high absorbency such as a starch-based material, a cellulose-based material, a polyacrylic acid-based material, a polyvinyl alcoholbased material, and a polyoxyethylene-based material, and mixtures thereof can be exemplified. As a method of adding the water absorbing powder to the nonwoven fabric, the water absorbing powder may be attached (applied) to the surface of the nonwoven fabric or may be interposed between two nonwoven fabrics.

The configuration of the cable main body 10 is not particularly limited to the above as long as the cable main body 10 may include at least one optical fiber. For example, although the cable body main 10 described above has a so-called slotless type structure, the cable main body 10 may have a loose tube type or a slot type structure. In the present embodiment, the accommodating member accommodating the optical fiber is the inner sheath 30. Although not particularly limited, the elastic deformation of the accommodating member occupies most of the elastic deformation described later of the case main body 10. On the other hand, in a case where the cable main body 10 is configured as the loose tube type, a tube accommodating the optical fibers corresponds to an example of the above-described accommodating member. In a case where the cable main body 10 is configured as the slot type, the slot rod having grooves that accommodate the optical fibers corresponds to an example of the above-mentioned accommodating member.

A pair of the ripcords 50A and 50B are string-shaped members (ripping cords) for tearing the reinforcing sheet 60 and the outer sheath 70 when taking out the cable main body 10 from the optical fiber cable 1 at the middle portion or the end portion of the optical fiber cable 1. Each of the ripcords 50A and 50B extends along the axial direction of the optical fiber cable 1. The pair of ripcords 50A and 50B are arranged to extend in substantially parallel with the cable main body 10 interposed therebetween and face each other.

Although not particularly limited, each of the ripcords 50A and 50B is made of fibers such as polyester, polyimide, aramid, glass, or a fiber assembly such as a twisted yarn formed by twisting such fibers together. As the ripcords 50A and 50B, the fiber or the twisted yarn impregnated with resin may be used.

The reinforcing sheet 60 covers the outer periphery of the cable main body 10 for protecting the cable main body 10. The reinforcing sheet 60 prevents the cable main body 10 from being damaged, for example, when the optical fiber cable 1 is bitten by an animal.

Although not particularly shown, the reinforcing sheet 60 has a corrugated shape. Specifically, the corrugated shape is formed by arranging annular peaks and valleys along the circumferential direction of the optical fiber cable 1 alternately in the axial direction of the optical fiber cable 1. Since the reinforcing sheet 60 has such a corrugated shape, flexibility is given to the reinforcing sheet 60. The corrugated shape may be formed by peaks and valleys extending in a spiral shape. The reinforcing sheet 60 may not have a corrugated shape.

Grooves that extend along the axial direction of the optical fiber cable 1 and that can accommodate the above-mentioned ripcords 50A and 50B are not formed on the inner surface of the reinforcing sheet 60. Further, grooves that extend along the axial direction of the optical fiber cable 1 and that can accommodate the above-mentioned ripcords 50A and 50B are not formed on the outer surface of the above-mentioned cable main body 10 (specifically, the outer surface of the wrapping tape 40). For this reason, the ripcords 50A and 50B are disposed in spaces 65 (described later) formed between the reinforcing sheet 60 and the cable main body 10.

Although not particularly shown, the reinforcing sheet 60 includes a sheet main body and resin films laminated on both sides of the sheet main body. As the sheet main body, for example, a metal sheet, a fiber sheet, or a fiberreinforced plastic (FRP) sheet or the like can be used. As the material of which the metal sheet is made, for example, iron, iron alloys including stainless steel, aluminum, aluminum alloys, copper, or copper alloy or the like can be used. As the material of which the fiber sheet is made, glass fibers and aramid fibers or the like can be exemplified. Further, as the resin films, for example, a heat-melt type adhesive film or the like can be used. The reinforcing sheet 60 may not include the resin films.

The reinforcing sheet 60 is formed in a tubular shape by being longitudinally disposed and wound around the cable main body 10. Specifically, the reinforcing sheet 60 is wound around the outer periphery of the cable main body 10 in a state in which the longitudinal direction of the reinforcing sheet 60 corresponds to the axial direction of the optical fiber cable 1 and the width direction of the reinforcing sheet 60 corresponds to the circumferential direction of the optical fiber cable 1. The reinforcing sheet 60 is bonded (thermally fused) to the outer sheath 70 by the outer resin film of the reinforcing sheet 60. The first end 61 of the reinforcing sheet 60 overlaps with the second end 62 of the reinforcing sheet 60 in the circumferential direction of the optical fiber cable 1, thereby a lap portion 63 of the reinforcing sheet 60 is formed. In the lap portion 63, the outer and inner resin films of the reinforcing sheet 60 are bonded (thermally fused) to each other.

The lap portion 63 of the reinforcing sheet 60 is disposed in the vicinity of the tension member 80A or 80B in the circumferential direction of the optical fiber cable 1. The lap portion 63 may overlap with the tension member 80A or 80B in the circumferential direction of the optical fiber cable 1. On the other hand, the lap portion 63 does not overlap with the ripcords 50A and 50B in the circumferential direction of the optical fiber cable 1, and the lap portion 63 and the ripcords 50A and 50B are located at different positions in the circumferential direction of the optical fiber cable 1. In this way, the lap portion 63 of the reinforcing sheet 60 does not overlap with the lip cords 50A and 50B, and therefore it is possible to prevent the ripcords 50A and 50B disposed in the spaces 65 from being cut by the edge of the reinforcing sheet 60. When the reinforcing sheet 60 is wound around the cable main body 10 in a cylindrical shape, the first end 61 and the second end 62 of the reinforcing sheet 60 may be butted against each other without forming the lap portion 53 on the reinforcing sheet 60.

The outer sheath 70 is a cylindrical member covering the outer periphery of the reinforcing sheet 60. As an example of the material of which the outer sheath 70 is made, a resin material such as polyvinyl chloride (PVC), polyethylene (PE), nylon, ethylene fluoride, polypropylene (PP) and polyolefin resin and mixtures of these resin materials can be exemplified. An additive such as a flame retardant and a stabilizer may be added to the above resin material.

A plurality of (four in the present embodiment) tension members (tensile strength members) 80A to 80D are buried inside the outer sheath 70. The tension members 80A to 80D are linear members extending in the extending direction of the optical fiber cable 1. When the stress in the extension direction of the optical fiber cable 1 is applied to the optical fiber cable 1, the tension members 80A to 80D bear the stress to suppress the application of stress and strain to the optical fiber 21. The optical fiber cable 1 may not include the tension members 80A to 80D. Alternatively, the tension member is not buried inside the outer sheath 70. For example, the tension member may be buried inside the inner sheath 30.

The tension members 80A and 80B are adjacent to each other in the circumferential direction of the optical fiber cable 1. The tension members 80C and 80D are also adjacent to each other in the circumferential direction of the optical fiber cable 1. The tension members 80A and 80B and the tension members 80C and 80D face each other with the cable main body 10 interposing therebetween.

The number of the tension members included in the optical fiber cable 1 is not particularly limited to the above. The arrangement of the tension members inside the outer sheath 80 is not particularly limited to the above. For example, a plurality of tension members may be arranged at equal intervals in the circumferential direction of the optical fiber cable 1.

In the present embodiment, the X-axis in FIG. 1 passes through the middle point between the centers of the tension members 80A and 80B and the middle point between the centers of the tension members 80C and 80D. On the other hand, the Y-axis in FIG. 1 passes through the center of the ripcord 50A and the center of the ripcord 50B. Therefore, the facing direction (X direction in FIG. 1) of the tension members 80A to 80D is substantially perpendicular to the facing direction (Y direction in FIG. 1) of the ripcords 50A and 50B. It is possible to improve the workability of the tearing operation by not overlapping the ripcords 50A and 50B with the tension members 80A to 80D in the circumferential direction of the optical fiber cable 1. The ripcords 50A and 50B may be located within a range of $\pm 45$ degrees with respect to the direction (Y direction in FIG. 1) that is substantially perpendicular to the facing direction (X direction in FIG. 1) of the tension members 80A to 80D in the circumferential direction of the optical fiber cable 1.

As examples of the material of which each of the tension members 80A to 80D is made, a non-metallic material and a metallic material can be exemplified. Although not particularly limited, as specific examples of the non-metallic material, fiber reinforced plastics (FRP) such as glass fiber reinforced plastic (GFRP), aramid fiber reinforced plastic (KFRP) reinforced with Kevlar (registered trademark), polyethylene fiber reinforced plastic reinforced with polyethylene fiber, and carbon fiber reinforced plastic (CFRP) reinforced with carbon fiber. On the other hand, although not particularly limited, as specific examples of the metallic material, a metal wire such as a steel wire can be exemplified.

As described later, in the present embodiment, when manufacturing the optical fiber cable 1, the reinforcing sheet 60 is pressed inward to plastically deform the reinforcing sheet 60, therefore the cable main body 10 is compressed and deformed by the reinforcing sheet 60. Accordingly, the reinforcing sheet 60 is in partial contact with the cable main body 10 in a state of holding an elastic deformation of the cable main body 10 toward the inside of the cable main body 10. That is, the cable main body 10 is accommodated in the reinforcing sheet 60 in a state in which the cable main body 10 is compressed in the X direction (short axis direction) in FIG. 1. Therefore, when the cable main body 10 is taken out from the reinforcing sheet 60, the cable main body 10 is released from the elastic deformation, and the cross-sectional shape of the cable main body 10 expands due to the elastic force. The deformation of the cable main body 10 that occurs when the cable main body 10 is compressed may include inelastic (lasting) deformation in addition to the above-mentioned elastic deformation.

In other words, the cable main body 10 and the reinforcing sheet 60 are in contact with each other at a first contact area of the cable main body 10 and a second contact area of the reinforcing sheet 60 in the cross section (cross section shown in FIG. 1, hereinafter also simply referred to as the "perpendicular cross section") perpendicular to the extending direction of the optical fiber cable 1, and the cable main body 10 is covered with the reinforcing sheet 60 in a state in which the cable main body 10 has a stress that tends to expand in a direction from a first contact point included in the first contact portion toward a second contact point included in the second contact portion.

Although not particularly limited, specifically, the deformation rate (compress rate) Cr of the cable main body 10 after deformation with respect to the cable main body 10 in an unloaded state (before deformation) satisfies the following formula (4). When the deformation rate Cr is 4.1% or more, it is possible to further improve the workability of the tearing operation. When the deformation rate Cr is 16.2% or less, it is possible to suppress deterioration in transmission characteristics of the optical fiber. The deformation rate Cr may also satisfy the following formula (5).

$$4.1\% \leqq Cr \leqq 16.2\% \ ... \ (4)$$

$$4.8\% \leqq Cr \leqq 13.7\% \ ... \ (5)$$

The deformation rate Cr is a value calculated by the following formulas (6) and (7). In the formulas (6) and (7), $D_{01}$ is the inner diameter of the inner sheath 30 before deformation (before being compressed), $D_{02}$ is the outer diameter of the inner sheath 30 before deformation, $D_{11}$ is the short diameter of the inner diameter of the inner sheath 30 after deformation (after being compressed), and Ca is the deformation amount (compressed amount) of the cable main body 10 with respect to the cable main body 10 before deformation.

$$Cr = Ca/D_{02} \times 100 \ ... \ (6)$$

$$Ca = D_{01} - D_{11} \ ... \ (7)$$

The circumference L or the cross-sectional area S may be measured by observing the cross section of the cable main body 10 after deformation, and the inner diameter $D_{01}$ of the inner sheath 30 before deformation and the outer diameter $D_{02}$ of the cable main body 10 before deformation may be estimated by true circle conversion using the following formulas (8) and (9). In the following formulas (8) and (9), D is the diameter of the circle and is the above $D_{01}$ or $D_{02}$.

$$L = \pi \times D \ ... \ (8)$$

$$S = \pi \times (D/2)^2 \ ... \ (9)$$

Although not particularly limited, specifically, the recovery rate Rr of the cable main body 10 in an unload state (after release) with respect to the cable main body 10 after deformation satisfies the following formula (10).

$$106\% \leqq Rr \leqq 131\% \ ... \ (10)$$

The recovery rate Rr is calculated using the following formulas (11) to (13). In the formulas (11) to (13), $D_{11}$ is the short diameter of the inner diameter of the inner sheath 30 after deformation (after being compressed), $D_{12}$ is the long diameter of the inner diameter of the inner sheath 30 after deformation, $D_{21}$ is the short diameter of the inner diameter of the inner sheath 30 after release (after being taken out from the reinforcing sheet 60), $D_{22}$ is the long diameter of the inner diameter of the inner sheath 30 after release, $A_1$ is the aspect ratio of the inner diameter of the inner sheath 30 after deformation, $A_2$ is the aspect ratio of the inner diameter of the inner sheath 30 after release.

$$Rr = A_2/A_1 \times 100 \ ... \ (11)$$

$$A_1 = D_{11}/D_{12} \ ... \ (12)$$

$$A_2 = D_{21}/D_{22} \ ... \ (13)$$

The unloaded state means a state in which no load is applied to the cable main body 10 from the outside. The unloaded state is, for example, a state in which a load other than the own weight is not applied to the cable main body 10 before being accommodated in the reinforcing sheet 60, or a state in which a load other than the own weight is not applied to the cable main body 10 after being taken out from the reinforcing sheet 60. More specifically, the unloaded state, for example, is a state in which the radial direction force of the cable main body 10 is not applied to the cross section cut perpendicular to the longitudinal direction of the cable main body 10, and the unloaded state includes a state in which the epoxy resin or the like is filled into the inside of the cable main body 10 so as not to deform the cable main body 10.

Although not particularly limited, the intersection angle θ between a virtual straight line $VL_1$ passing through the center 1a of the optical fiber cable 1 and the centers of the ripcord 50A and 50B and the direction (a virtual straight line $VL_2$ in the figure) of the elastic deformation of the cable main body 10 preferably satisfies he following formula (14).

$$45° \leqq \theta \leqq 135° \dots (14)$$

In the present embodiment, the virtual straight line $VL_1$ coincides with the Y-axis in Fig.1, the virtual straight line $VL_2$ coincides with the X-axis in FIG. 1, and the Y-axis and the X-axis intersect each other at the center 1a of the optical fiber cable 1 in FIG. 1.

Since the cable main body 10 is compressed in the X direction (short axis direction) of FIG. 1 by the reinforcing sheet 60, the reinforcing sheet 60 has an oval cross-sectional shape in which the inner diameter in the long axis is Dsy and the inner diameter in the short axis is Dsx (Dsy>Dsx). The cable main body 10 also has an oval cross-sectional shape in which the outer diameter in the long axis is Dcy and the outer diameter in the short axis is Dcx (Dcy>Dcx). The long axes of the reinforcing sheet 60 and the cable main body 10 coincide with the Y-axis in FIG. 1, and the short axes of the reinforcing sheet 60 and the cable main body 10 coincide with the X-axis in FIG. 1. In the case in which the reinforcing sheet 60 has a corrugated shape, the above-mentioned Dsy and Dsx are the inner diameters of the inner circumferential surface at the valleys of the corrugated shape, and the above-mentioned Dsy and Dsx are the inner diameters of the inner circumferential surface at the apex portion that protrudes convexly toward the inside in the radial direction of the optical fiber cable 1.

The inner diameter Dsy of the long axis of the reinforcing sheet 60 is wider than the outer diameter Dcy of the long axis of the cable main body 10 (Dsy>Dcy). On the other hand, the inner diameter Dsx of the short axis of the reinforcing sheet 60 and the outer diameter Dcx of the short axis of the cable main body 10 are substantially the same (Dsx≒Dcx), and the inner surface of the reinforcing sheet 60 and the outer surface of the cable main body 10 are in contact at their short axis portions 66.

The ripcords 50A and 50B can be disposed within the spaces 65 by the inner diameter Dsx of the short axis of the reinforcing sheet 60 satisfying the following formula (15). In the following formula (15), $D_{02}$ is the outer diameter of the inner sheath 30 having a circular cross-sectional shape before being compressed by the reinforcing sheet 60, Tw is the thickness of the wrapping tape 40, and Dr is the outer diameter of the ripcord 50A or 50B.

$$Dsx \leqq D_{02} + 3 \times Tw + Dr \dots (15)$$

A pair of the spaces 65 are formed between the outer circumferential surface of the cable main body 10 and the inner circumferential surface of the reinforcing sheet 60, and the spaces 65 are partitioned by the contact portions 66 in which the cable main body 10 and the reinforcing sheet 60 contact each other. As described above, since the cable main body 10 is compressed in the X direction (short axis direction) in FIG. 1, each of the spaces 65 has a crescent-shaped cross-sectional shape. The distance $L_1$ of each space 65 along the radial direction of the optical fiber cable 1 is maximum on the long axis, and the distance $L_1$ is equal to or less than the outer diameter Dr of the ripcord 50A or 50B ($L_1 \leqq$ Dr).

In the present embodiment, the reinforcing sheet 60 is in partial contact with the cable main body 10 in a state of holding an elastic deformation of the cable main body 10 toward the inside of the cable main body 10, therefore it is possible to limit the movement of the ripcords 50A and 50B between the cable main body 10 and the reinforcing sheet 60 within a certain range.

In the present embodiment, the distance $L_1$ of the space 65 that is formed between the cable main body 10 and the reinforcing sheet 60 is equal to or less than the outer diameter Dr of the ripcord 50A or 50B ($L_1 \leqq$ Dr). Therefore, it is possible to further suppress the movement of the ripcords 50A and 50B between the cable main body 10 and the reinforcing sheet 60 in the circumferential direction of the optical fiber cable 1.

Although not particularly limited, in the perpendicular cross section of the optical fiber cable 1, a region more than 20% and less than 95% of the outer circumferential surface of the cable main body 10 is not in contact with the inner circumferential surface of the reinforcing sheet 60. In other words, in the perpendicular cross section of the optical fiber cable 1, a region more than 5% and less than 80% of the outer circumferential surface of the cable body 10 is in contact with the inner circumferential surface of the reinforcing sheet 60. Therefore, in the perpendicular cross section of the optical fiber cable 1, the sum $S_1$ of the lengths of a pair of the contact portions 66 in the outer circumferential surface of the cable main body 10 is more than 5% and less than 80% of the total length $L_2$ of the outer circumferential surface of the cable main body 10 ($L_2 \times 5\% \leqq S_1 \leqq L_2 \times 80\%$).

In this way, it is possible to dispose the ripcords 50A and 50B in the spaces 65 localized between the cable main body 10 and the reinforcing sheet 60 by partially contacting the outer peripheral surface of the cable body 10 and the inner peripheral surface of the reinforcing sheet 60 without forming the above-mentioned grooves on the inner peripheral surface of the reinforcing sheet 60 and the outer peripheral surface of the cable body 10. Further, as will be described later, since the groove for accommodating the ripcord is not formed in the reinforcing sheet 60 and the cable main body 10, it is possible to limit the circumferential movement of the ripcord 50A and 50B within a certain range while maintaining the design freedom and reliability of the optical fiber cable 1.

In the present embodiment, although both of the reinforcing sheet 60 and the cable main body 10 have an oval cross-sectional shape, the cross-sectional shapes of the reinforcing sheet 60 and the cable main body 10 are not particularly limited to the above as long as the reinforcing sheet 60 and the cable main body 10 are in partial contact with each other and the spaces 65 are formed between the reinforcing sheet 60 and the cable main body 10.

For example, the reinforcing sheet 60 may have a circular cross-sectional shape, and the cable main body 10 may have an oval cross-sectional shape. Alternatively, the reinforcing sheet 60 may have an oval cross-sectional shape, and the cable main body 10 may have a circular cross-sectional shape. The above-mentioned oval shape includes a long circle (a shape formed by connecting two semicircles with a pair of straight lines), and a polygon having an arcuate corner portion, and the like in addition to the mathematical elliptic shape.

Alternatively, the cross-sectional shape of the reinforcing sheet 60 may be a non-circular shape other than an oval. In this case, the "short axis" means the shortest straight axis that passes through the center 1a of the optical fiber cable 1 in the cross-sectional shape of the reinforcing sheet 60. Similarly, the cross-sectional shape of the cable main body 10 may be a non-circular shape other than an oval. In this case, the "short axis" means the shortest straight axis that passes through the center 1a of the optical fiber cable 1 in the cross-sectional shape of the cable main body 10.

The inner circumferential surface of the outer sheath 70 also has an oval cross-sectional shape corresponding to the cross-sectional shape of the reinforcing sheet 60. On the other hand, the outer circumferential surface of the outer sheath 70 has a circular cross-sectional shape. Therefore, the thickness Ty of the portion of the outer sheath 70 corresponding to the long axis of the cross-sectional shape of the reinforcing sheet 60 is thinner than the thickness Tx of the portion of the outer sheath 70 corresponding to the short axis of the cross-sectional shape of the reinforcing sheet 60 (Ty<Tx).

The thickness Ty of the portion of the outer sheath 70 corresponding to the long axis of the cross-sectional shape of the reinforcing sheet 60 is thinner than the thickness Ta (not shown) of the other portion of the outer sheath 70 (Ty<Ta). As a result, the thinnest portion of the outer sheath 70 faces the ripcords 50A and 50B, and therefore it is possible to improve the workability of the tearing operation.

The thickness Tx of the portion of the outer sheath 70 corresponding to the short axis of the cross-sectional shape of the reinforcing sheet 60 is thicker than the thickness Tb (not shown) of the other portion of the outer sheath 70 (Tx>Tb). Therefore, it is possible to dispose the tension member 80A to 80D only on the portion of the outer sheath 70 corresponding to the short axis of the cross-sectional profile of the reinforcing sheet 60. The thicknesses Tx, Ty, Ta, and Tb of the outer sheath 70 described above are the thicknesses of the outer sheath 70 along the radial direction of the optical fiber cable 1.

The optical fiber cable 1 may not include the reinforcing sheet 60. In this case, the spaces 65 are formed between the inner circumferential surface of the outer sheath 70 and the outer circumferential surface of the cable main body 10, and the outer sheath 70 is in partial contact with the cable main body 10 in a state of holding the elastic deformation of the cable main body 10 toward the inside of the cable main body 10.

Alternatively, the optical fiber cable 1 may not include the wrapping tape 40. In this case, the spaces 65 are formed between the inner circumferential surface of the reinforcing sheet 60 and the outer circumferential surface of the inner sheath 30, and the reinforcing sheet 60 is in partial contact with the inner sheath 30 in a state of holding the elastic deformation of the cable main body 10 toward the inside of the cable main body 10.

Alternatively, the optical fiber cable 1 may not include the wrapping tape 40 and the reinforcing sheet 60. In this case, the spaces 65 are formed between the inner circumferential surface of the outer sheath 70 and the outer circumferential surface of the inner sheath 30, and the outer sheath 70 is in partial contact with the inner sheath 30 in a state of holding the elastic deformation of the cable main body 10 toward the inside of the cable main body 10.

Since the thickness Tx of the portion of the outer sheath 70 corresponding to the short axis of the cross-sectional shape of its inner circumferential surface is thicker than the thickness Tb (not shown) of other portion of the outer sheath 70 (Tx > Tb), it is easy to hold the elastic deformation of the cable main body 10 by the outer sheath 70 even if the optical fiber cable 1 does not include the reinforcing tape 60.

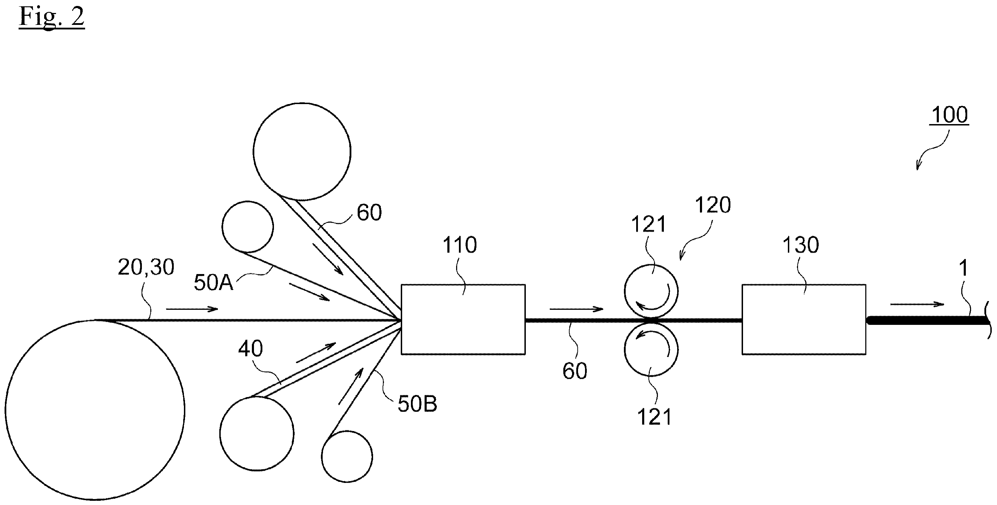

Hereinafter, a method of manufacturing the optical fiber cable 1 in the present embodiment will be described with reference to FIG. 2. FIG. 2 is a diagram showing a manufacturing apparatus 100 for manufacturing the optical fiber cable 1 in the present embodiment.

The manufacturing apparatus 100 for manufacturing the optical fiber cable 1 includes a forming machine 110, a pressing machine 120, and an extruding machine 130.

The forming machine 110 is continuously supplied with the optical fiber assembly 20 covered with the inner sheath 30, the wrapping tape 40, the ripcords 50A and 50B, and the reinforcing sheet 60 from the respective feeding machines.

The forming machine 110 includes a die that guides the wrapping tape 40 and the ripcords 50A and 50B. The forming machine 110 uses the die, while moving the optical fiber assembly 20 covered with the inner sheath 30, to form the cable main body 10 by longitudinally disposing and winding the wrapping tape 40 around the inner sheath 30 and dispose the ripcords 50A and 50B along the outer periphery of the cable main body 10.

The forming machine 110 also includes a forming guide that forms the reinforcing sheet 60 into a cylindrical shape. The forming machine 110 uses the forming guide, while forming the reinforcing sheet 60 into a cylindrical shape, to cover the outer periphery of the cable main body 10 along which the ripcords 50A and 50B are attached with the reinforcing sheet 60.

The pressing machine 120 includes a pair of pressure rollers 121 that press and deform the reinforcing sheet 60. The cable main body 10 covered with the reinforcing sheet 60 is supplied from the forming machine 110, and the cable main body 10 covered with the reinforcing sheet 60 is passed between the pressure rollers 121. As the cable main body 10 passes through, the pressure rollers 121 press the reinforcing sheet 60, and the cross-sectional shape of the reinforcing sheet 60 is deformed from a circular shape to an oval shape. In addition, the cable main body 10 is also compressed along with the deformation of the reinforcing sheet 60, and the cross-sectional shape of the cable main body 10 is also deformed from a circular shape to an oval shape.

At this time, since the deformation of the reinforcing sheet 60 is plastic deformation, the cable main body 10 is accommodated in the reinforcing sheet 60 in a state of holding its elastic deformation. The pressure roller 121 presses the reinforcing sheet 60 in a direction (indicated by the left and right thick arrows in FIG. 1) that does not overlap with the ripcords 50A and 50B and that is in the radial direction of the optical fiber cable 1. In the present embodiment, the pressure roller 121 presses in opposite directions toward the center 1a of the optical fiber cable 1. As a result, the pair of spaces 65 partitioned by the contact portions 66 in which the cable main body 10 and the reinforcing sheet 60 contact each other are formed, and it is possible to respectively accommodate the ripcords 50A and 50B in the pair of spaces 65, therefore it is possible to limit the movement of the ripcords 50A and 50B in the circumferential direction of the optical fiber cable 1 within a certain range.

When deforming the reinforcing sheet 60, the ripcords 50A and 50B can be disposed within the spaces 65 by pressing the reinforcing sheet 60 with the pressure rollers 121 so as to satisfy the following formula (16). In the following formula (16), Ddx is the distance of a portion of a space between the pair of pressure rollers 121 corresponding to the short axis of the reinforcing sheet 60 after deformation, $D_{02}$ is the outer diameter of the inner sheath 30 having a circular cross-sectional shape before being compressed by the reinforcing sheet 60, Tw is the thickness of the wrapping tape 40, Ts is the thickness of the reinforcing sheet 60, and Dr is the outer diameter of the ripcord 50A or 50B.

$$\mathrm{Ddx} \leqq D_{02} + 3 \times \mathrm{Tw} + 3 \times \mathrm{Ts} + \mathrm{Dr} \dots (16)$$

The structure of the pressing machine 120 is not particularly limited to the above so long as it has the function of pressing and deforming the reinforcing sheet 60. For example, the pressing machine 120 may include a die that presses and deforms the reinforcing sheet 60. In this case, Ddx in the above formula (16) is the short diameter of the die hole of the die.

The extruding machine 130 is supplied with the reinforcing sheet 60 and the cable main body 10 compressed by the pressing machine 120. The extruding machine 130 forms the outer sheath 70 having a circular cross-sectional shape by extruding the molten resin filled in the die from the die hole to the outer periphery of the reinforcing sheet 60 while guiding the cable body 10 covered with the reinforcing sheet 60 to the die hole using the nipple.

In the present embodiment, the reinforcing sheet 60 is in partial contact with the cable main body 10 in a state of holding the elastic deformation of the cable main body 10 toward the inside of the cable main body 10, therefore it is possible to limit the movement of the ripcords 50A and 50B in the circumferential direction of the optical fiber cable 1 within a certain range, and it is possible to improve the workability of the tearing operation.

In the present embodiment, the distance $L_1$ along the radial direction of the optical fiber cable 1 of the space 65 that is formed between the cable main body 10 and the reinforcing sheet 60 is equal to or less than the outer diameter Dr of the ripcord 50A or 50B ($L_1 \leqq$ Dr). Therefore, it is possible to further suppress the movement of the ripcords 50A and 50B in the circumferential direction of the optical fiber cable 1, and it is possible to further improve the workability of the tearing operation.

When grooves for accommodating the ripcords are formed in the reinforcing sheet or the cable main body, the design of the optical fiber cable 1 may be restricted by the grooves. On the other hand, in the present embodiment, since the grooves for accommodating the ripcords 50A and 50B are not formed in the reinforcing sheet 60 and the cable main body 10, therefore it is possible to limit the circumferential movement of the ripcords 50A and 50B within a certain range while maintaining the design freedom of the optical fiber cable 1.

Further, when grooves for accommodating the ripcords are formed in the reinforcing sheet or the cable main body, since the stress is concentrated in the groove, the reliability of the optical fiber cable may be affected. On the other hand, in the present embodiment, since the grooves for accommodating the ripcords 50A and 50B are not formed in the reinforcing sheet 60 and the cable main body 10, therefore it is possible to limit the circumferential movement of the ripcords 50A and 50B within a certain range while maintaining the reliability of the optical fiber cable 1.

Further, in the present embodiment, since the ripcords 50A and 50B can be restrained in the spaces 65 formed between the cable main body 10 and the reinforcing sheet 60 by simply pressing and deforming the cable main body 10 when manufacturing the optical fiber cable 1, it is possible to easily manufacture the optical fiber cable 1 in which the movement of the ripcords 50A and 50B is limited within a certain range.

It should be noted that the embodiments described above are described to facilitate understanding of the present disclosure and are not described to limit the present disclosure. It is therefore intended that the elements disclosed in the above embodiment include all design modifications and equivalents to fall within the technical scope of the present disclosure.

For example, although the ripcords 50A and 50B and the direction of the elastic deformation of the cable main body 10 do not overlap with each other in the circumferential direction of the optical fiber cable 1 in the above-described embodiment, the positional relationship between the ripcords 50A and 50B and the direction of the elastic deformation is not particularly limited to this.

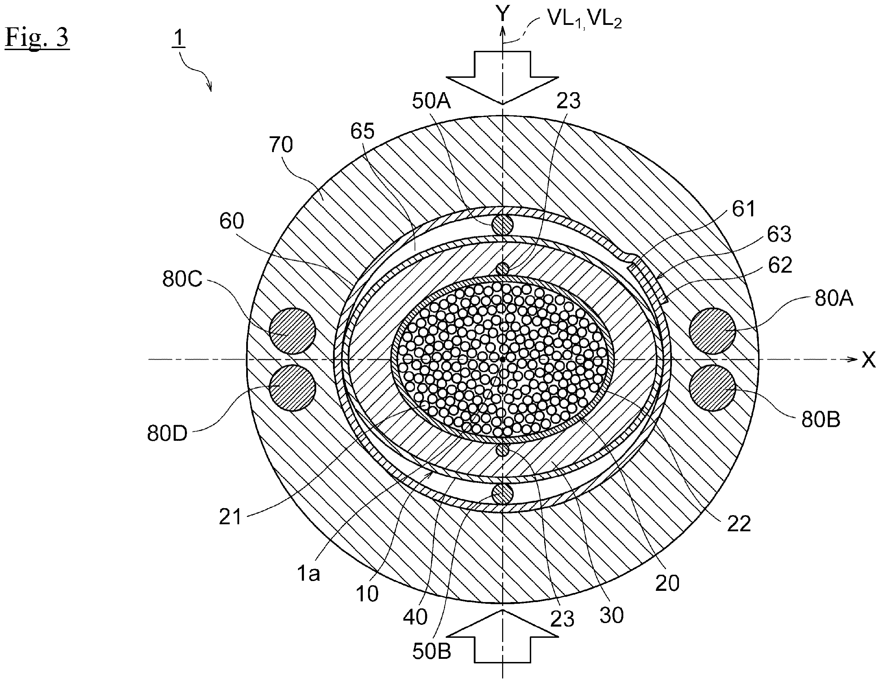

For example, as shown in FIG. 3, the ripcords 50A and 50B and the direction (indicated by the upper and lower thick arrows in FIG. 3) of the elastic deformation of the cable main body 10 may overlap with each other in the circumferential direction of the optical fiber cable 1. That is, the virtual straight line $VL_1$ passing through the center 1a of the fiber cable 1 and the centers of the ripcords 50A and 50B may be parallel to the direction (the virtual straight line $VL_2$ in FIG. 3) of the elastic deformation of the cable main body 10. FIG. 3 is a cross-sectional view showing the optical fiber cable in another embodiment of the present invention.

In this way, the reinforcing sheet 60 is in partial contact with the cable main body 10 in a state of holding the elastic deformation of the cable main body 10 toward the inside of the cable main body 10, therefore the distance at which the ripcords 50A and 50B are sandwiched by the elastic deformation of the cable main body 10 can be kept constant. Accordingly, it is possible to limit the movement of the ripcords 50A and 50B in the circumferential direction of the optical fiber cable 1 within a certain range, and it is possible to improve the workability of the tearing operation. Although, in the embodiment shown in FIG. 3, the inner circumferential surface of the reinforcing sheet 60 and the outer circumferential surface of the cable main body 10 are in contact with each other at their portions of the long axes, the reinforcing sheet 60 and the cable main body 10 may have cross-sectional shapes in which the inner circumferential surface of the reinforcing sheet 60 and the outer circumferential surface of the cable main body 10 are in contact with each other at their positions of the short axes. Although, in the embodiment shown in FIG. 3, the thickness of the portion of the outer sheath 70 corresponding to the long axis of the cross-sectional shape of the reinforcing sheet 60 is thinner than the thickness of other portion of the outer sheath 70, the thickness of the portion of the outer sheath 70 corresponding to the long axis of the cross-sectional shape of the reinforcing sheet 60 may be thicker than the thickness of other portion of the outer sheath 70.

Although, in the above-mentioned, the reinforcing sheet 60 is pressed and deformed by the pair of pressure rollers included in the pressing machine 120 independent of the forming machine 110 after forming the reinforcing sheet 60 into a cylindrical shape by the forming machine 110, the timing of pressing and deforming the reinforcing sheet 60 is not particularly limited to this. For example, the guide of the forming machine 110 may have a function of pressing and deforming the reinforcing sheet 60 in addition to the function of forming the reinforcing sheet 60 into a cylindrical shape. In this case, the forming of the reinforcing sheet 60 into a cylindrical shape and the pressing and deforming of the reinforcing sheet 60 are performed almost simultaneously.

In the case in which the optical fiber cable 1 does not include the reinforcing sheet 60, for example, the outer periphery of the cable main body 10 along which the ripcords 50A and 50B are attached is covered with the outer sheath 70 by the extruding machine 130 in FIG. 2, and then, the outer sheath 70 is pressed and deformed by the pair of pressure rollers to compress the cable main body 10 before the outer sheath 70 is cured. Alternatively, the cable main body 10 may be compressed by the nipple during the extrusion of the outer sheath 70. In this case, the extrusion of the outer sheath 70 and the pressing and deforming of the cable main body 10 are performed almost simultaneously.

[Examples]

Hereinafter, examples and comparative examples of the present embodiment will be described. In the following Examples and Comparative Examples, optical fiber cables were produced, and transmission characteristics and tearing workability of the optical fiber cable were evaluated. The present invention is not limited to these examples.

<Examples A1 to A7>

In each of Examples A1 to A7, an optical fiber cable, such as the one shown in FIG. 1, that includes a cable main body including 144 optical fibers using optical fiber tapes was produced. As the optical fiber included in the cable main body, an optical fiber having a diameter of 250µm was used.

In each of Examples A1 to A7, the cable main body was deformed from a true circular shape to an oval shape by pressing the reinforcing sheet with the pressure rollers. At this time, the pressure rollers were adjusted so that the aspect

ratio $A_1$ (see formula (12) above) of the inner diameter of the inner sheath in each of Examples A1 to A7 was 0.65, 0.7, 0.75, 0.8, 0.85, 0.9, or 0.95. As a result of these adjustments, the deformation amount Ca (see formula (7) above) and deformation rate Cr (see formula (6) above) of the cable main body in each of Examples A1 to A7 were the values shown in Table 1 below.

Thereafter, in each of Examples A1 to A7, the cable main body was taken out from the deformed reinforcing sheet, and the cross-sectional dimensions of the cable main body were measured. Then, based on the dimensions, the aspect ratio $A_2$ (see formula (13) above) of the inner diameter of the inner sheath after release in each of Examples A1 to A7 and the recovery rate Rr (see formula (11) above) of the cable main body in each of Examples A1 to A7 were calculated, and the results are shown in Table 1 below.

<Comparative Example A1>

In Comparative Example A1, an optical fiber cable was produced that had the same configuration as the above-mentioned Examples A1 to A7 excepting that the reinforcing sheet and the cable main body were not deformed (i.e., the aspect ratio $A_1$ was set to 1). The deformation amounts Ca, the deformation ratio Cr, the aspect ratio $A_2$, and the recovery rate Rr in the comparative A1 were the values shown in Table 1 below.

<Table 1>

Table 1

| Item | Example A1 | Example A2 | Example A3 | Example A4 | Example A5 | Example A6 | Example A7 | Comparative Example A1 |
|---|---|---|---|---|---|---|---|---|
| Optical fiber | 250μm Fiber | | | | | | | |
| Number of Optical fibers [cores] | 144 | 144 | 144 | 144 | 144 | 144 | 144 | 144 |
| Aspect ratio after deformation $A_1$ [-] | 0.65 | 0.7 | 0.75 | 0.8 | 0.85 | 0.9 | 0.95 | 1 |
| Deformation amount Ca [mm] | 1.24 | 1.03 | 0.83 | 0.65 | 0.47 | 0.31 | 0.15 | 0.00 |
| Deformation rate Cr [%] | 17.1 | 14.2 | 11.5 | 9.0 | 6.5 | 4.2 | 2.1 | 0.0 |
| Aspect ratio after release $A_2$ [-] | 0.91 | 0.92 | 0.92 | 0.93 | 0.93 | 0.95 | 0.99 | 1.00 |
| Recovery rate Rr [%] | 140 | 131 | 123 | 116 | 109 | 106 | 104 | 100 |
| Transmission characteristics | B | A | A | A | A | A | A | A |
| Tearing workability | A | A | A | A | A | B | C | D |

<Examples B1 to B7>

In each of Examples B1 to B7, an optical fiber cable, such as the one shown in FIG. 1, that includes a cable main body including 288 optical fibers using optical fiber tapes was produced. As the optical fiber included in the cable main body, an optical fiber having a diameter of 250μm was used. In each of Examples B1 to B7, the cable main body was deformed from a true circular shape to an oval shape. At this time, the pressing force of the pressure rollers was adjusted so that the aspect ratio $A_1$ in each of Examples B1 to B7 was 0.65, 0.7, 0.75, 0.8, 0.85, 0.9, or 0.95. The deformation amount Ca, the deformation rate Cr, the aspect ratio $A_2$, and the recovery ratio Rr in each of Examples B1 to B7 were the values shown in Table 2 below.

<Comparative Example B1>

In Comparative Example B1, an optical fiber cable was produced that had the same configuration as the above-mentioned Examples B1 to B7 excepting that the reinforcing sheet and the cable main body were not deformed. The deformation amounts Ca, the deformation ratio Cr, the aspect ratio $A_2$, and the recovery rate Rr in the comparative B1 were the values shown in Table 2 below.

<Table 2>

Table 2

| Item | Example B1 | Example B2 | Example B3 | Example B4 | Example B5 | Example B6 | Example B7 | Comparative Example B1 |
|---|---|---|---|---|---|---|---|---|
| Optical fiber | 250μm Fiber | | | | | | | |
| Number of Optical fibers [cores] | 288 | 288 | 288 | 288 | 288 | 288 | 288 | 288 |
| Aspect ratio after deformation $A_1$ [-] | 0.65 | 0.7 | 0.75 | 0.8 | 0.85 | 0.9 | 0.95 | 1 |
| Deformation amount Ca [mm] | 1.52 | 1.27 | 1.03 | 0.80 | 0.58 | 0.38 | 0.18 | 0.00 |
| Deformation rate Cr [%] | 17.8 | 14.8 | 12.0 | 9.3 | 6.8 | 4.4 | 2.1 | 0.0 |
| Aspect ratio after release $A_2$ [-] | 0.91 | 0.92 | 0.92 | 0.93 | 0.93 | 0.95 | 0.99 | 1.00 |
| Recovery rate Rr [%] | 140 | 131 | 123 | 116 | 109 | 106 | 104 | 100 |
| Transmission characteristics | B | A | A | A | A | A | A | A |
| Tearing workability | A | A | A | A | A | B | C | D |

<Examples C1 to C7>

In each of Examples C1 to C7, an optical fiber cable, such as the one shown in FIG. 1, that includes a cable main body including 864 optical fibers using optical fiber tapes was produced. As the optical fiber included in the cable main body, an optical fiber having a diameter of 250μm was used. In each of Examples C1 to C7, the cable main body was deformed from a true circular shape to an oval shape. At this time, the pressing force of the pressure rollers was adjusted so that the aspect ratio $A_1$ in each of Examples C1 to C7 was 0.65, 0.7, 0.75, 0.8, 0.85, 0.9, or 0.95. The deformation amount Ca, the deformation rate Cr, the aspect ratio $A_2$, and the recovery ratio Rr in each of Examples C1 to C7 were the values shown in Table 3 below.

<Comparative Example C1>

In Comparative Example C1, an optical fiber cable was produced that had the same configuration as the above-mentioned Examples C1 to C7 excepting that the reinforcing sheet and the cable main body were not deformed. The deformation amounts Ca, the deformation ratio Cr, the aspect ratio $A_2$, and the recovery rate Rr in the comparative C1 were the values shown in Table 3 below.

<Table 3>

Table 3

| Item | Example C1 | Example C2 | Example C3 | Example C4 | Example C5 | Example C6 | Example C7 | Comparative Example C1 |
|---|---|---|---|---|---|---|---|---|
| Optical fiber | 250μm Fiber | | | | | | | |
| Number of Optical fibers [cores] | 864 | 864 | 864 | 864 | 864 | 864 | 864 | 864 |
| Aspect ratio after deformation $A_1$ [-] | 0.65 | 0.7 | 0.75 | 0.8 | 0.85 | 0.9 | 0.95 | 1 |
| Deformation amount Ca [mm] | 2.52 | 2.10 | 1.70 | 1.32 | 0.96 | 0.63 | 0.31 | 0.00 |
| Deformation rate Cr [%] | 19.0 | 15.8 | 12.8 | 9.9 | 7.3 | 4.7 | 2.3 | 0.0 |
| Aspect ratio after release $A_2$ [-] | 0.91 | 0.92 | 0.92 | 0.93 | 0.93 | 0.95 | 0.99 | 1.00 |
| Recovery rate Rr [%] | 140 | 131 | 123 | 116 | 109 | 106 | 104 | 100 |
| Transmission characteristics | B | A | A | A | A | A | A | A |
| Tearing workability | A | A | A | A | A | B | C | D |

<Examples D1 to D7>

In each of Examples D1 to D7, an optical fiber cable, such as the one shown in FIG. 1, that includes a cable main body including 144 optical fibers using optical fiber tapes was produced. As the optical fiber included in the cable main body, an optical fiber having a diameter of 200μm was used. In each of Examples D1 to D7, the cable main body was deformed from a true circular shape to an oval shape. At this time, the pressing force of the pressure rollers was adjusted so that the aspect ratio $A_1$ in each of Examples D1 to D7 was 0.65, 0.7, 0.75, 0.8, 0.85, 0.9, or 0.95. The deformation amount Ca, the deformation rate Cr, the aspect ratio $A_2$, and the recovery ratio Rr in each of Examples D1 to D7 were the values shown in Table 4 below.

<Comparative Example D1>

In Comparative Example D1, an optical fiber cable was produced that had the same configuration as the above-mentioned Examples D1 to D7 excepting that the reinforcing sheet and the cable main body were not deformed. The deformation amounts Ca, the deformation ratio Cr, the aspect ratio $A_2$, and the recovery rate Rr in the comparative D1 were the values shown in Table 4 below.

<Table 4>

Table 4

| Item | Example D1 | Example D2 | Example D3 | Example D4 | Example D5 | Example D6 | Example D7 | Comparative Example D1 |
|---|---|---|---|---|---|---|---|---|
| Optical fiber | 200$\mu$m Fiber | | | | | | | |
| Number of Optical fibers [cores] | 144 | 144 | 144 | 144 | 144 | 144 | 144 | 144 |
| Aspect ratio after deformation $A_1$ [-] | 0.65 | 0.7 | 0.75 | 0.8 | 0.85 | 0.9 | 0.95 | 1 |
| Deformation amount Ca [mm] | 1.08 | 0.89 | 0.72 | 0.56 | 0.41 | 0.27 | 0.13 | 0.00 |
| Deformation rate Cr [%] | 16.6 | 13.8 | 11.2 | 8.7 | 6.4 | 4.1 | 2.0 | 0.0 |
| Aspect ratio after release $A_2$ [-] | 0.91 | 0.92 | 0.92 | 0.93 | 0.93 | 0.95 | 0.99 | 1.00 |
| Recovery rate Rr [%] | 140 | 131 | 123 | 116 | 109 | 106 | 104 | 100 |
| Transmission characteristics | B | A | A | A | A | A | A | A |
| Tearing workability | A | A | A | A | A | B | C | D |

<Examples E1 to E7>

In each of Examples E1 to E7, an optical fiber cable, such as the one shown in FIG. 1, that includes a cable main body including 864 optical fibers using optical fiber tapes was produced. As the optical fiber included in the cable main body, an optical fiber having a diameter of 200$\mu$m was used. In each of Examples E1 to E7, the cable main body was deformed from a true circular shape to an oval shape. At this time, the pressing force of the pressure rollers was adjusted so that the aspect ratio $A_1$ in each of Examples E1 to E7 was 0.65, 0.7, 0.75, 0.8, 0.85, 0.9, or 0.95. The deformation amount Ca, the deformation rate Cr, the aspect ratio $A_2$, and the recovery ratio Rr in each of Examples E1 to E7 were the values shown in Table 5 below.

<Comparative Example E1>

In Comparative Example E1, an optical fiber cable was produced that had the same configuration as the above-mentioned Examples E1 to E7 excepting that the reinforcing sheet and the cable main body were not deformed. The deformation amounts Ca, the deformation ratio Cr, the aspect ratio $A_2$, and the recovery rate Rr in the comparative E1 were the values shown in Table 5 below.

<Table 5>

Table 5

| Item | Example E1 | Example E2 | Example E3 | Example E4 | Example E5 | Example E6 | Example E7 | Comparative Example E1 |
|---|---|---|---|---|---|---|---|---|
| Optical fiber | 200μm Fiber | | | | | | | |
| Number of Optical fibers [cores] | 864 | 864 | 864 | 864 | 864 | 864 | 864 | 864 |
| Aspect ratio after deformation $A_1$ [-] | 0.65 | 0.7 | 0.75 | 0.8 | 0.85 | 0.9 | 0.95 | 1 |
| Deformation amount Ca [mm] | 2.19 | 1.82 | 1.47 | 1.15 | 0.84 | 0.54 | 0.26 | 0.00 |
| Deformation rate Cr [%] | 18.7 | 15.5 | 12.6 | 9.8 | 7.1 | 4.6 | 2.3 | 0.0 |
| Aspect ratio after release $A_2$ [-] | 0.91 | 0.92 | 0.92 | 0.93 | 0.93 | 0.95 | 0.99 | 1.00 |
| Recovery rate Rr [%] | 140 | 131 | 123 | 116 | 109 | 106 | 104 | 100 |
| Transmission characteristics | B | A | A | A | A | A | A | A |
| Tearing workability | A | A | A | A | A | B | C | D |

<Examples F1 to F7>

In each of Examples F1 to F7, an optical fiber cable, such as the one shown in FIG. 1, that includes a cable main body including 1728 optical fibers using optical fiber tapes was produced. As the optical fiber included in the cable main body, an optical fiber having a diameter of 200μm was used. In each of Examples F1 to F7, the cable main body was deformed from a true circular shape to an oval shape. At this time, the pressing force of the pressure rollers was adjusted so that the aspect ratio $A_1$ in each of Examples F1 to F7 was 0.65, 0.7, 0.75, 0.8, 0.85, 0.9, or 0.95. The deformation amount Ca, the deformation rate Cr, the aspect ratio $A_2$, and the recovery ratio Rr in each of Examples F1 to F7 were the values shown in Table 6 below.

<Comparative Example F1>

In Comparative Example F1, an optical fiber cable was produced that had the same configuration as the above-mentioned Examples F1 to F7 excepting that the reinforcing sheet and the cable main body were not deformed. The deformation amounts Ca, the deformation ratio Cr, the aspect ratio $A_2$, and the recovery rate Rr in the comparative F1 were the values shown in Table 6 below.

<Table 6>

## EP 4 685 536 A1

Table 6

| Item | Example F1 | Example F2 | Example F3 | Example F4 | Example F5 | Example F6 | Example F7 | Comparative Example F1 |
|---|---|---|---|---|---|---|---|---|
| Optical fiber | 200μm Fiber | | | | | | | |
| Number of Optical fibers [cores] | 1728 | 1728 | 1728 | 1728 | 1728 | 1728 | 1728 | 1728 |
| Aspect ratio after deformation $A_1$ [-] | 0.65 | 0.7 | 0.75 | 0.8 | 0.85 | 0.9 | 0.95 | 1 |
| Deformation amount Ca [mm] | 3.21 | 2.67 | 2.16 | 1.68 | 1.23 | 0.80 | 0.39 | 0.00 |
| Deformation rate Cr [%] | 19.4 | 16.2 | 13.1 | 10.2 | 7.4 | 4.8 | 2.3 | 0.0 |
| Aspect ratio after release $A_2$ [-] | 0.91 | 0.92 | 0.92 | 0.93 | 0.93 | 0.95 | 0.99 | 1.00 |
| Recovery rate Rr [%] | 140 | 131 | 123 | 116 | 109 | 106 | 104 | 100 |
| Transmission characteristics | B | A | A | A | A | A | A | A |
| Tearing workability | A | A | A | A | A | B | C | D |

<Examples G1 to G7>

In each of Examples G1 to G7, an optical fiber cable, such as the one shown in FIG. 1, that includes a cable main body including 144 optical fibers using optical fiber tapes was produced. As the optical fiber included in the cable main body, an optical fiber having a diameter of 160μm was used. In each of Examples G1 to G7, the cable main body was deformed from a true circular shape to an oval shape. At this time, the pressing force of the pressure rollers was adjusted so that the aspect ratio $A_1$ in each of Examples G1 to G7 was 0.65, 0.7, 0.75, 0.8, 0.85, 0.9, or 0.95. The deformation amount Ca, the deformation rate Cr, the aspect ratio $A_2$, and the recovery ratio Rr in each of Examples G1 to G7 were the values shown in Table 7 below.

<Comparative Example G1>

In Comparative Example G1, an optical fiber cable was produced that had the same configuration as the above-mentioned Examples G1 to G7 excepting that the reinforcing sheet and the cable main body were not deformed. The deformation amounts Ca, the deformation ratio Cr, the aspect ratio $A_2$, and the recovery rate Rr in the comparative G1 were the values shown in Table 7 below.

<Table 7>

Table 7

| Item | Example G1 | Example G2 | Example G3 | Example G4 | Example G5 | Example G6 | Example G7 | Comparative Example G1 |
|---|---|---|---|---|---|---|---|---|
| Optical fiber | 160μm Fiber | | | | | | | |
| Number of Optical fibers [cores] | 144 | 144 | 144 | 144 | 144 | 144 | 144 | 144 |
| Aspect ratio after deformation $A_1$ [-] | 0.65 | 0.7 | 0.75 | 0.8 | 0.85 | 0.9 | 0.95 | 1 |
| Deformation amount Ca [mm] | 0.91 | 0.76 | 0.61 | 0.48 | 0.35 | 0.23 | 0.11 | 0.00 |
| Deformation rate Cr [%] | 17.2 | 14.3 | 11.6 | 9.0 | 6.6 | 4.3 | 2.1 | 0.0 |
| Aspect ratio after release $A_2$ [-] | 0.91 | 0.92 | 0.92 | 0.93 | 0.93 | 0.95 | 0.99 | 1.00 |
| Recovery rate Rr [%] | 140 | 131 | 123 | 116 | 109 | 106 | 104 | 100 |
| Transmission characteristics | B | A | A | A | A | A | A | A |
| Tearing workability | A | A | A | A | A | B | C | D |

<Examples H1 to H7>

In each of Examples H1 to H7, an optical fiber cable such as the one shown in FIG. 1 that includes a cable main body including 288 optical fibers using optical fiber tapes was produced. As the optical fiber included in the cable main body, an optical fiber having a diameter of 160μm was used. In each of Examples H1 to H7, the cable main body was deformed from a true circular shape to an oval shape. At this time, the pressing force of the pressure rollers was adjusted so that the aspect ratio $A_1$ in each of Examples H1 to H7 was 0.65, 0.7, 0.75, 0.8, 0.85, 0.9, or 0.95. The deformation amount Ca, the deformation rate Cr, the aspect ratio $A_2$, and the recovery ratio Rr in each of Examples H1 to H7 were the values shown in Table 8 below.

<Comparative Example H1>

In Comparative Example H1, an optical fiber cable was produced that had the same configuration as the above-mentioned Examples H1 to H7 excepting that the reinforcing sheet and the cable main body were not deformed. The deformation amounts Ca, the deformation ratio Cr, the aspect ratio $A_2$, and the recovery rate Rr in the comparative H1 were the values shown in Table 8 below.

<Table 8>

Table 8

| Item | Example H1 | Example H2 | Example H3 | Example H4 | Example H5 | Example H6 | Example H7 | Comparative Example H1 |
|---|---|---|---|---|---|---|---|---|
| Optical fiber | 160μm Fiber | | | | | | | |
| Number of Optical fibers [cores] | 288 | 288 | 288 | 288 | 288 | 288 | 288 | 288 |
| Aspect ratio after deformation $A_1$ [-] | 0.65 | 0.7 | 0.75 | 0.8 | 0.85 | 0.9 | 0.95 | 1 |
| Deformation amount Ca [mm] | 1.14 | 0.95 | 0.77 | 0.60 | 0.44 | 0.28 | 0.14 | 0.00 |
| Deformation rate Cr [%] | 17.9 | 14.9 | 12.0 | 9.4 | 6.8 | 4.4 | 2.2 | 0.0 |
| Aspect ratio after release $A_2$ [-] | 0.91 | 0.92 | 0.92 | 0.93 | 0.93 | 0.95 | 0.99 | 1.00 |
| Recovery rate Rr [%] | 140 | 131 | 123 | 116 | 109 | 106 | 104 | 100 |
| Transmission characteristics | B | A | A | A | A | A | A | A |
| Tearing workability | A | A | A | A | A | B | C | D |

<Examples I1 to I7>

In each of Examples I1 to I7, an optical fiber cable, such as the one shown in FIG. 1, that includes a cable main body including 864 optical fibers using optical fiber tapes was produced. As the optical fiber included in the cable main body, an optical fiber having a diameter of 160μm was used. In each of Examples I1 to I7, the cable main body was deformed from a true circular shape to an oval shape. At this time, the pressing force of the pressure rollers was adjusted so that the aspect ratio $A_1$ in each of Examples I1 to I7 was 0.65, 0.7, 0.75, 0.8, 0.85, 0.9, or 0.95. The deformation amount Ca, the deformation rate Cr, the aspect ratio $A_2$, and the recovery ratio Rr in each of Examples I1 to I7 were the values shown in Table 9 below.

<Comparative Example I1>

In Comparative Example I1, an optical fiber cable was produced that had the same configuration as the above-mentioned Examples I1 to I7 excepting that the reinforcing sheet and the cable main body were not deformed. The deformation amounts Ca, the deformation ratio Cr, the aspect ratio $A_2$, and the recovery rate Rr in the comparative I1 were the values shown in Table 9 below.

<Table 9>

Table 9

| Item | Example I1 | Example I2 | Example 13 | Example 14 | Example I5 | Example 16 | Example 17 | Comparative Example I1 |
|---|---|---|---|---|---|---|---|---|
| Optical fiber | 160μm Fiber | | | | | | | |
| Number of Optical fibers [cores] | 864 | 864 | 864 | 864 | 864 | 864 | 864 | 864 |
| Aspect ratio after deformation $A_1$ [-] | 0.65 | 0.7 | 0.75 | 0.8 | 0.85 | 0.9 | 0.95 | 1 |
| Deformation amount Ca [mm] | 1.85 | 1.54 | 1.25 | 0.97 | 0.71 | 0.46 | 0.22 | 0.00 |
| Deformation rate Cr [%] | 18.3 | 15.2 | 12.3 | 9.5 | 7.0 | 4.5 | 2.2 | 0.0 |
| Aspect ratio after release $A_2$ [-] | 0.91 | 0.92 | 0.92 | 0.93 | 0.93 | 0.95 | 0.99 | 1.00 |
| Recovery rate Rr [%] | 140 | 131 | 123 | 116 | 109 | 106 | 104 | 100 |
| Transmission characteristics | B | A | A | A | A | A | A | A |
| Tearing workability | A | A | A | A | A | B | C | D |

<Examples J1 to J7>

In each of Examples J1 to J7, an optical fiber cable, such as the one shown in FIG. 1, that includes a cable main body including 1728 optical fibers using optical fiber tapes was produced. As the optical fiber included in the cable main body, an optical fiber having a diameter of 160μm was used. In each of Examples J1 to J7, the cable main body was deformed from a true circular shape to an oval shape. At this time, the pressing force of the pressure rollers was adjusted so that the aspect ratio $A_1$ in each of Examples J1 to J7 was 0.65, 0.7, 0.75, 0.8, 0.85, 0.9, or 0.95. The deformation amount Ca, the deformation rate Cr, the aspect ratio $A_2$, and the recovery ratio Rr in each of Examples J1 to J7 were the values shown in Table 10 below.

<Comparative Example J1>

In Comparative Example J1, an optical fiber cable was produced that had the same configuration as the above-mentioned Examples J1 to J7 excepting that the reinforcing sheet and the cable main body were not deformed. The deformation amounts Ca, the deformation ratio Cr, the aspect ratio $A_2$, and the recovery rate Rr in the comparative J1 were the values shown in Table 10 below.

<Table 10>

Table 10

| Item | Example J1 | Example J2 | Example J3 | Example J4 | Example J5 | Example J6 | Example J7 | Comparative Example J1 |
|---|---|---|---|---|---|---|---|---|
| Optical fiber | 160μm Fiber | | | | | | | |
| Number of Optical fibers [cores] | 1728 | 1728 | 1728 | 1728 | 1728 | 1728 | 1728 | 1728 |
| Aspect ratio after deformation $A_1$ [-] | 0.65 | 0.7 | 0.75 | 0.8 | 0.85 | 0.9 | 0.95 | 1 |
| Deformation amount Ca [mm] | 2.45 | 2.04 | 1.65 | 1.28 | 0.94 | 0.61 | 0.30 | 0.00 |
| Deformation rate Cr [%] | 18.9 | 15.7 | 12.7 | 9.9 | 7.2 | 4.7 | 2.3 | 0.0 |
| Aspect ratio after release $A_2$ [-] | 0.91 | 0.92 | 0.92 | 0.93 | 0.93 | 0.95 | 0.99 | 1.00 |
| Recovery rate Rr [%] | 140 | 131 | 123 | 116 | 109 | 106 | 104 | 100 |
| Transmission characteristics | B | A | A | A | A | A | A | A |
| Tearing workability | A | A | A | A | A | B | C | D |

<Examples K1 to K7>

In each of Examples K1 to K7, an optical fiber cable, such as the one shown in FIG. 1, that includes a cable main body including 144 optical fibers using optical fiber wires instead of optical fiber tapes was produced. As the optical fiber included in the cable main body, an optical fiber having a diameter of 250μm was used. In each of Examples K1 to K7, the cable main body was deformed from a true circular shape to an oval shape. At this time, the pressing force of the pressure rollers was adjusted so that the aspect ratio $A_1$ in each of Examples K1 to K7 was 0.65, 0.7, 0.75, 0.8, 0.85, 0.9, or 0.95. The deformation amount Ca, the deformation rate Cr, the aspect ratio $A_2$, and the recovery ratio Rr in each of Examples K1 to K7 were the values shown in Table 11 below.

<Comparative Example K1>

In Comparative Example K1, an optical fiber cable was produced that had the same configuration as the above-mentioned Examples K1 to K7 excepting that the reinforcing sheet and the cable main body were not deformed. The deformation amounts Ca, the deformation ratio Cr, the aspect ratio $A_2$, and the recovery rate Rr in the comparative K1 were the values shown in Table 11 below.

<Table 11>

Table 11

| Item | Example K1 | Example K2 | Example K3 | Example K4 | Example K5 | Example K6 | Example K7 | Comparative Example K1 |
|---|---|---|---|---|---|---|---|---|
| Optical fiber | 250$\mu$m Fiber | | | | | | | |
| Number of Optical fibers [cores] | 144 | 144 | 144 | 144 | 144 | 144 | 144 | 144 |
| Aspect ratio after deformation $A_1$ [-] | 0.65 | 0.7 | 0.75 | 0.8 | 0.85 | 0.9 | 0.95 | 1 |
| Deformation amount Ca [mm] | 1.02 | 0.85 | 0.69 | 0.53 | 0.39 | 0.25 | 0.12 | 0.00 |
| Deformation rate Cr [%] | 16.4 | 13.7 | 11.1 | 8.6 | 6.3 | 4.1 | 2.0 | 0.0 |
| Aspect ratio after release $A_2$ [-] | 0.91 | 0.92 | 0.92 | 0.93 | 0.93 | 0.95 | 0.99 | 1.00 |
| Recovery rate Rr [%] | 140 | 131 | 123 | 116 | 109 | 106 | 104 | 100 |
| Transmission characteristics | B | A | A | A | A | A | A | A |
| Tearing workability | A | A | A | A | A | B | C | D |

<Examples L1 to L7>

In each of Examples L1 to L7, an optical fiber cable, such as the one shown in FIG. 1, that includes a cable main body including 288 optical fibers using optical fiber wires instead of optical fiber tapes was produced. As the optical fiber included in the cable main body, an optical fiber having a diameter of 250$\mu$m was used. In each of Examples L1 to L7, the cable main body was deformed from a true circular shape to an oval shape. At this time, the pressing force of the pressure rollers was adjusted so that the aspect ratio $A_1$ in each of Examples L1 to L7 was 0.65, 0.7, 0.75, 0.8, 0.85, 0.9, or 0.95. The deformation amount Ca, the deformation rate Cr, the aspect ratio $A_2$, and the recovery ratio Rr in each of Examples L1 to L7 were the values shown in Table 12 below.

<Comparative Example L1>

In Comparative Example L1, an optical fiber cable was produced that had the same configuration as the above-mentioned Examples K1 to K7 excepting that the reinforcing sheet and the cable main body were not deformed. The deformation amounts Ca, the deformation ratio Cr, the aspect ratio $A_2$, and the recovery rate Rr in the comparative L1 were the values shown in Table 12 below.

<Table 12>

Table 12

| Item | Example L1 | Example L2 | Example L3 | Example L4 | Example L5 | Example L6 | Example L7 | Comparative Example L1 |
|---|---|---|---|---|---|---|---|---|
| Optical fiber | 250$\mu$m Fiber | | | | | | | |
| Number of Optical fibers [cores] | 288 | 288 | 288 | 288 | 288 | 288 | 288 | 288 |
| Aspect ratio after deformation $A_1$ [-] | 0.65 | 0.7 | 0.75 | 0.8 | 0.85 | 0.9 | 0.95 | 1 |
| Deformation amount Ca [mm] | 1.34 | 1.11 | 0.90 | 0.70 | 0.51 | 0.33 | 0.16 | 0.00 |
| Deformation rate Cr [%] | 17.4 | 14.4 | 11.7 | 9.1 | 6.6 | 4.3 | 2.1 | 0.0 |
| Aspect ratio after release $A_2$ [-] | 0.91 | 0.92 | 0.92 | 0.93 | 0.93 | 0.95 | 0.99 | 1.00 |
| Recovery rate Rr [%] | 140 | 131 | 123 | 116 | 109 | 106 | 104 | 100 |
| Transmission characteristics | B | A | A | A | A | A | A | A |
| Tearing workability | A | A | A | A | A | B | C | D |

<Examples M1 to M7>

In each of Examples M1 to M7, an optical fiber cable, such as the one shown in FIG. 1, that includes a cable main body including 864 optical fibers using optical fiber wires instead of optical fiber tapes was produced. As the optical fiber included in the cable main body, an optical fiber having a diameter of 250$\mu$m was used. In each of Examples M1 to M7, the cable main body was deformed from a true circular shape to an oval shape. At this time, the pressing force of the pressure rollers was adjusted so that the aspect ratio $A_1$ in each of Examples M1 to M7 was 0.65, 0.7, 0.75, 0.8, 0.85, 0.9, or 0.95. The deformation amount Ca, the deformation rate Cr, the aspect ratio $A_2$, and the recovery ratio Rr in each of Examples M1 to M7 were the values shown in Table 13 below.

<Comparative Example M1>

In Comparative Example M1, an optical fiber cable was produced that had the same configuration as the above-mentioned Examples M1 to M7 excepting that the reinforcing sheet and the cable main body were not deformed. The deformation amounts Ca, the deformation ratio Cr, the aspect ratio $A_2$, and the recovery rate Rr in the comparative M1 were the values shown in Table 13 below.

<Table 13>

Table 13

| Item | Example M1 | Example M2 | Example M3 | Example M4 | Example M5 | Example M6 | Example M7 | Comparative Example M1 |
|---|---|---|---|---|---|---|---|---|
| Optical fiber | 250$\mu$m Fiber | | | | | | | |
| Number of Optical fibers [cores] | 864 | 864 | 864 | 864 | 864 | 864 | 864 | 864 |
| Aspect ratio after deformation $A_1$ [-] | 0.65 | 0.7 | 0.75 | 0.8 | 0.85 | 0.9 | 0.95 | 1 |
| Deformation amount Ca [mm] | 2.12 | 1.76 | 1.43 | 1.11 | 0.81 | 0.53 | 0.26 | 0.00 |
| Deformation rate Cr [%] | 18.6 | 15.5 | 12.5 | 9.7 | 7.1 | 4.6 | 2.2 | 0.0 |
| Aspect ratio after release $A_2$ [-] | 0.91 | 0.92 | 0.92 | 0.93 | 0.93 | 0.95 | 0.99 | 1.00 |
| Recovery rate Rr [%] | 140 | 131 | 123 | 116 | 109 | 106 | 104 | 100 |
| Transmission characteristics | B | A | A | A | A | A | A | A |
| Tearing workability | A | A | A | A | A | B | C | D |

<Evaluation of transmission characteristics>

Transmission characteristics were evaluated for Example A1 to M7 and Comparative Example A1 to M1 described above. In the evaluation of the transmission characteristics, the optical fiber cables of Examples A1 to M7 and Comparative Examples A1 to M1 were subjected to two cycles of temperature change in the range of -40°C to +70°C in accordance with the provision of "Temperature cycling" in the "Telcordia Technologies Generic Requirements GR-20-CORE Issue 4, July 2013" to measure the maximum loss variation at the measurement wavelength of 1.55$\mu$m. In the evaluation of the transmission characteristics, when the maximum loss variation was 0.15 dB/km or less, the result was evaluated as extremely good and given an "A", and when the maximum loss variation exceeded 0.15 dB/km but the result was sufficient, the result was given a "B". The results are shown in Tables 1 to 13 above.

In Examples A1 to M1 in which the deformation ratio Cr of the cable main body 10 after deformation with respect to the cable main body 10 before deformation exceeded 16.2%, the maximum loss variation of the transmission characteristic evaluation exceeded 0.15 dB/km. This is considered to be because the optical fiber was compressed by compressing of the cable main body. Further, in Examples A1 to M1, the recovery rate Rr of the cable main body after release with respect to the cable main body after deformation exceeded 131%.

Oh the other hand, in Examples A2 to M7 and Comparative Examples A1 to M1 in which the deformation rate Cr was 16.2% or less, the maximum loss variation of the transmission characteristics evaluation was 0.15 dB/km or less. Further, in Examples A2 to M7 and Comparative Examples A1 to M1, the recovery rate Rr was 131% or less. From these results, it was confirmed that the deformation rate Cr is preferably 16.2% or less (Cr $\leqq$ 16.2 %) and the recovery rate is preferably 131% or less (Rr $\leqq$ 131%).

<Evaluation of tearing workability >

The workability of the operation of tearing the reinforcing sheet and the outer sheath using the ripcord was evaluated for Example A1 to M7 and Comparative Example A1 to M1 described above. In the tearing workability evaluation, when the tearing operation was performed smoothly, the result was evaluated as extremely good and given an "A", when it took a little time to perform the tearing operation, the result was evaluated as good and given a "B", when it took a long time to perform the tearing operation, the result was evaluated as sufficient and given a "C", and when the tearing work was not performed, the result was evaluated as insufficient and given a "D". The results are shown in Tables 1 to 13 above.

In Examples A7 to M7 and Comparative Examples A1 to M1 in which the deformation rate Cr of the cable main body 10 after deformation with respect to the cable main body 10 before deformation was less than 4.1%, the tearing workability was evaluated as "C" or "D". This is considered to be because the ripcord moved between the cable main body and the reinforcing sheet. Further, in Examples A7 to M7 and Comparative Examples A1 to M1, the recovery rate Rr of the cable main body after release with respect to the cable main body after deformation was less than 106%.

On the other hand, n Examples A1 to M6 in which the deformation rate Cr was 4.1% or more, the tearing workability was evaluated as "A" or "B". Further, in Examples A1 to M6, the recovery rate Rr was 106% or more. From these results, it was confirmed that the deformation rate Cr is preferably 4.1% or more (Cr $\geqq$ 4.1 %), and the recovery rate is preferably 106% or more (Rr $\geqq$ 106%).

[EXPLANATIONS OF LETTERS OR NUMERALS]

| 1 | Optical fiber cable |
|---|---|
| 10 | Cable main body |
| 20 | Optical fiber assembly |
| 21 | Optical fiber |
| 22 | Wrapping tape |
| 23 | Ripcord |
| 30 | Inner sheath |
| 40 | Wrapping tape |
| 50A, 50B | Ripcord |
| 60 | Reinforcing sheet |
| 61 | First end |
| 62 | Second end |
| 63 | Lap portion |
| 65 | Space |
| 70 | Outer sheath |
| 80A to 80D | Tension member |
| 100 | Manufacturing apparatus |
| 110 | Forming machine |
| 120 | Pressing machine |
| 121 | Pressure roller |
| 130 | Extruding machine |

**Claims**

1. An optical fiber cable comprising:

   a cable main body that includes an optical fiber;
   a protective layer that accommodates the cable main body; and
   a ripcord that is disposed in a space formed between the cable main body and the protective layer, wherein the protective layer is in partial contact with the cable main body in a state of holding an elastic deformation of the cable main body toward an inside of the cable main body.

2. The optical fiber cable according to claim 1, wherein

   a following formula (1) is satisfied.

   $$45° \leqq \theta \leqq 135° \ ... \ (1)$$

   In the above formula (1), $\theta$ is an intersection angle between a virtual line and a direction of the elastic deformation, and the virtual line passes through a center of the optical fiber cable and the ripcord.

3. The optical fiber cable according to claim 1 or 2, wherein
a distance of the space in a radial direction of the optical fiber cable is equal to or less than an outer diameter of the ripcord.

4. The optical fiber cable according to claim 1, wherein

a distance of the space in a radial direction of the optical fiber cable is equal to or less than an outer diameter of the ripcord, and
the ripcord and a direction of the elastic deformation overlap with each other in a circumferential direction of the optical fiber cable.

5. The optical fiber cable according to any one of claims 1 to 4, wherein
in a cross section perpendicular to an extending direction of the optical fiber cable, a short axis portion of an inner circumferential surface of the protective layer and a short axis portion of an outer circumferential surface of the cable main body are in contact with each other.

6. The optical fiber cable according to any one of claims 1 to 5, wherein
the protective layer includes:

a reinforcing sheet that covers an outer periphery of the cable main body; and
a sheath that covers an outer periphery of the reinforcing sheet, and
the reinforcing sheet is in partial contact with the cable main body.

7. The optical fiber cable according to claim 6, wherein

the reinforcing sheet includes a lap portion in which ends of the reinforcing sheet are laid on each other, and
the lap portion and the ripcord are located at different positions in a circumferential direction of the optical fiber cable.

8. The optical fiber cable according to any one of claims 1 to 7, wherein
a thickness of a contact portion of the protective layer with the cable main body in a radial direction is larger than a thickness of the other portion of the protective layer in the radial direction.

9. The optical fiber cable according to any one of claims 1 to 8, wherein
a deformation rate Cr of the cable main body with respect to the cable main body in an unloaded state satisfies a following formula (2).

$$4.1\% \leqq Cr \leqq 16.2\% \ ... \ (2)$$

10. The optical fiber cable according to any one of claims 1 to 9, wherein
a recovery rate Rr of the cable main body in an unloaded state with respect to the cable main body satisfies a following formula (3).

$$106\% \leqq Rr \leqq 131\% \ ... \ (3)$$

11. The optical fiber cable according to any one of claims 1 to 10, wherein
the protective layer includes an inner circumferential surface on which no groove extending along an extending direction of the optical fiber cable is formed.

12. The optical fiber cable according to any one of claims 1 to 11, wherein
the cable main body includes an outer circumferential surface on which no groove extending along an extending direction of the optical fiber cable is formed.

13. A method of manufacturing an optical fiber cable comprising:

a first step of preparing a cable main body including an optical fiber;
a second step of disposing a ripcord along an outer circumferential surface of the cable main body; and
a third step of accommodating the cable main body and the ripcord in a protective layer and pressing and deforming the cable main body.

14. The method of manufacturing the optical fiber cable according to claim 13, wherein
the protective layer includes:

a reinforcing sheet that covers an outer periphery of the cable main body; and
a sheath that covers an outer periphery of the reinforcing sheet, and
the third step includes deforming the cable main body by pressing the reinforcing sheet in a direction that does not overlap with the ripcord and that is in a radial direction of the optical fiber cable after accommodating the cable main body and the ripcord in the reinforcing sheet.

Fig. 1    1

EP 4 685 536 A1

EP 4 685 536 A1

Fig. 2

Fig. 3

EP 4 685 536 A1

30

## INTERNATIONAL SEARCH REPORT

| International application No. |
|---|
| **PCT/JP2024/005821** |

**A. CLASSIFICATION OF SUBJECT MATTER**

*G02B 6/44*(2006.01)i
FI:   G02B6/44 366; G02B6/44 381; G02B6/44 391

According to International Patent Classification (IPC) or to both national classification and IPC

**B. FIELDS SEARCHED**

Minimum documentation searched (classification system followed by classification symbols)

G02B6/44

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-106686 A (FUJIKURA LTD.) 09 July 2020 (2020-07-09) paragraphs [0010]-[0026], [0031]-[0038], fig. 1-3 | 1-2, 5-13 |
| A | | 3-4, 14 |
| P, X | EP 4206771 A1 (STERLITE TECHNOLOGIES LIMITED) 05 July 2023 (2023-07-05) paragraphs [0049]-[0064], fig. 1-3 | 1, 3-7, 11-13 |
| A | JP 2012-93527 A (OCC CORP.) 17 May 2012 (2012-05-17) fig. 2 | 1-14 |
| A | WO 2020/166369 A1 (NIPPON TELEGRAPH AND TELEPHONE CORPORATION) 20 August 2020 (2020-08-20) entire text, all drawings | 1-14 |
| A | CN 210640049 U (JIANGSU DICHENG CABLE CO., LTD.) 29 May 2020 (2020-05-29) entire text, all drawings | 1-14 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 April 2024** | **07 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/005821**

| Patent document cited in search report | | | Publication date (day/month/year) | Patent family member(s) | | | Publication date (day/month/year) |
|---|---|---|---|---|---|---|---|
| JP | 2020-106686 | A | 09 July 2020 | (Family: none) | | | |
| EP | 4206771 | A1 | 05 July 2023 | (Family: none) | | | |
| JP | 2012-93527 | A | 17 May 2012 | (Family: none) | | | |
| WO | 2020/166369 | A1 | 20 August 2020 | US | 2022/0155547 | A1 | |
| | | | | EP | 3926377 | A1 | |
| | | | | CN | 113366358 | A | |
| CN | 210640049 | U | 29 May 2020 | (Family: none) | | | |

Form PCT/ISA/210 (patent family annex) (July 2022)

**EP 4 685 536 A1**

REFERENCES CITED IN THE DESCRIPTION

**Patent documents cited in the description**

- JP 2023044714 A
- JP 2017072801 A